Europäisches Patentamt

European Patent Office

Office européen des brevets

(11) Veröffentlichungsnummer: **0 399 149**
**A2**

(12) **EUROPÄISCHE PATENTANMELDUNG**

(21) Anmeldenummer: **90103624.4**

(22) Anmeldetag: **24.02.90**

(51) Int. Cl.⁵: **H04Q 11/04**

Die Bezeichnung der Erfindung wurde geändert
(Richtlinien für die Prüfung im EPA, A-III, 7.3).

(30) Priorität: **26.05.89 DE 3917169**

(43) Veröffentlichungstag der Anmeldung:
**28.11.90 Patentblatt 90/48**

(84) Benannte Vertragsstaaten:
**AT BE CH ES FR GB IT LI NL SE**

(71) Anmelder: **TELENORMA GMBH**
**Mainzer Landstrasse 128-146**
**D-6000 Frankfurt/Main(DE)**

(72) Erfinder: **Reinmund, Dietrich, Dipl.-Ing.**
**Hans Holbein Strasse 23**
**D-8037 Olching(DE)**

(54) **Verfahren zum direkten Verbinden von ISDN-Endgeräten.**

(57)     2.1 Bei einer für digitale Kommunikations-Vermittlungsanlagen genormten Schnittstelle, welche den Anschluß von mehreren Teilnehmerendgeräten zuläßt, sollen Internverbindungen zwischen diesen an ein und derselben Schnittstelle angeschlossenen Teilnehmerendgeräten möglich sein, wobei nur ein Nutzdatenkanal belegt wird, so daß mindestens ein weiterer Nutzdatenkanal für ankommende oder abgehende Verbindungen zur Verfügung steht.

2.2 Zwischen die Schnittstelle der Kommunikations-Vermittlungsanlage und die davon ausgehende, zu den Teilnehmerendgeräten führende Bus-Leitung ist eine Kanalsteuerung geschaltet. Diese enthält eine Programmsteuerung, welche beim Aufbauen einer von einem der angeschlossenen Endgeräte ausgehende Verbindung an der auf dem Signalisierungskanal gesendete Information erkennt, ob die Verbindung zu einem an der gleichen Bus-Leitung angeschlossenen Endgerät führt. Es wird dann eine Umschalteinrichtung aktiviert, welche die Sendeleitung während der Durchschaltung des belegten Nutzdatenkanals auf die Empfangsleitung umschaltet, so daß nur ein Nutzdatenkanal belegt wird, auf dem dann eine gerichtete oder wechselseitig gerichtete Internverbindung besteht.

2.3 Mit diesem Verfahren wird erreicht, daß die Schnittstelle auch dann noch durch eine abgehende oder ankommende Verbindung belegt werden kann, wenn bereits eine interne Verbindung zwischen zwei an der gleichen Schnittstelle angeschlossenen Teilnehmerendgeräten durchgeschaltet ist.

## Verfahren zum direkten Verbinden von an digitalen Kommunikations-Vermittlungsanlagen angeschlossenen Endgeräten

Die Erfindung betrifft ein Verfahren zum direkten Verbinden von an digitalen Kommunikations-Vermittlungsanlagen angeschlossenen Endgeräten nach dem Oberbegriff des Patentanspruches 1.

In den TN-Nachrichten 1986, Heft 89 ist ein Aufsatz abgedruckt mit dem Titel: "ISDN-Schnittstellen im Teilnehmeranschlußbereich". Dort ist u.a. beschrieben, daß bei der digitalen Anschlußtechnik im Dienste integrierenden Netz (ISDN) für jeden Anschluß zwei sogenannte B-Kanäle zur Übertragung von Sprache und Nutzdaten vorgesehen sind und ein sogenannter D-Kanal für die Signalisierung zur Verfügung steht. Jeder der beiden B-Kanäle hat eine Übertragungskapazität von 64 kbit/s, so daß auch nach dem Pulscodemodulationsverfahren digitalisierte Sprache übertragen werden kann. Der Signalisierungskanal, hat eine Übertragungskapazität von 16 kbit/s. Auf der Seite 31 ist am Beispiel einer digitalen Nebenstellenanlage dargestellt, welche verschiedenen Möglichkeiten bei der digitalen Anschlußtechnik vorgesehen sind. Es ist dort die sogenannte So-Schnittstelle dargestellt (Varianten a und b), die es ermöglicht, bis zu acht Teilnehmerendgeräte anzuschließen.

Da die für mehrere Teilnehmerendgeräte gemeinsame Anschlußleitung vierdrähtig ausgeführt ist, und wie bereits erwähnt zwei Nutzdatenkanäle mit einer Kapazität von je 64 kbit/s sowie einen Signalisierungskanal mit einer Kapazität von 16 kbit/s aufweist, können über einen derartigen Anschluß zwei Verbindungen gleichzeitig bestehen. Über die digitale Vermittlungsanlage kann jedes Teilnehmerendgerät mit anderen Anschlüssen verbunden werden. Für jede derartige Verbindung wird bei der So-Schnittstelle ein B-Kanal in Sende- und Empfangsrichtung belegt. Selbstverständlich ist es auch möglich, daß zwei an der gleichen So-Schnittstelle angeschlossene Endgeräte miteinander verbunden werden. Dabei wird für die vom anrufenden Endgerät ausgehende Verbindung (abgehende Verbindung) einer der beiden B-Kanäle belegt. Da das angerufene Endgerät an der gleichen So-Schnittstelle angeschlossen ist entsteht für die ankommende Verbindung die Notwendigkeit, den zweiten B-Kanal zu belegen. Somit sind bei einer Verbindung zwischen zwei Endgeräten, welche an der gleichen So-Schnittstelle angeschlossen sind, alle beide zur Verfügung stehende Nutzdatenkanäle (B1 und B2) belegt. Dies hat zur Folge, daß für die übrigen an der gleichen So-Schnittstelle angeschlossenen Endgeräte keine Verbindungsmöglichkeit mehr besteht.

Eine Schaltungsanordnung für den Teilnehmeranschluß in einem Dienste integrierenden Digitalnetz (ISDN) ist aus der DE-OS 33 16 492 bekannt. Dabei handelt es sich um eine besonders ausgestaltete Netzabschlußeinheit, welche eine Vermittlungssteuerung enthält. Diese Netzabschlußeinheit ist über eine Anschlußleitung mit einer Vermittlungsstelle verbunden und weist mehrere zu Endgeräten führende Schnittstellen auf. Diese Schnittstellen können über ein von der Vermittlungssteuerung einstellbares Koppelfeld sowohl untereinander als auch mit der Anschlußleitung verbunden werden. Wie aus der Zeichnung und der Beschreibung zu entnehmen ist, sind bei den Schnittstellen auch solche vorgesehen, die den Anschluß von mehreren Endgeräten ermöglichen. Auch für diese Schnittstellen gilt die festgelegte Übertragungskapazität mit zwei Nutzdatenkanälen und einem Signalisierungskanal (B + B + D). Somit tritt auch bei dieser Konfiguration der Fall ein, daß bei einer Verbindung von zwei Endgeräten, welche an die gleiche Schnittstelle angeschlossen sind, beide Nutzdatenkanäle belegt werden, so daß für die übrigen an die betreffende Schnittstelle angeschlossenen Endgeräte keine Verbindungsmöglichkeit mehr besteht.

Unter den eingangs beschriebenen Voraussetzungen besteht die Aufgabe der vorliegenden Verbindung darin, ein Verfahren anzugeben, das eine weitere Verbindungsmöglichkeit auch dann bietet, wenn zwischen zwei an die gleiche Schnittstelle angeschlossenen Endgeräten bereits eine Internverbindung besteht.

Zur Lösung dieser Aufgabe ist eine Merkmalskombination vorgesehen, wie sie im Patentanspruch 1 angegeben ist.

Damit wird in vorteilhafter Weise erreicht, daß durch die Belegung nur eines Nutzdatenkanals für eine Internverbindung der andere Nutzdatenkanal für eine abgehende oder ankommende Verbindung mit einem der übrigen an die gleiche Schnittstelle angeschlossenen Endgeräte zur Verfügung steht.

Mit den in den Unteransprüchen angegebenen Weiterbildungen der Erfindung lassen sich vorteilhafte Anpassungen an den jeweiligen Anwendungsfall erreichen.

Ein Ausführungsbeispiel der Erfindung wird nachfolgend anhand von Zeichnungen näher erläutert.
Es zeigt:

Figur 1 die Prinzipdarstellung einer digitalen Kommunikations-Vermittlungsanlage mit einer sogenannten So-Schnittstelle

Figur 2 das Blockschaltbild einer mit der So-Schnittstelle verbundenen Kanalsteuerung

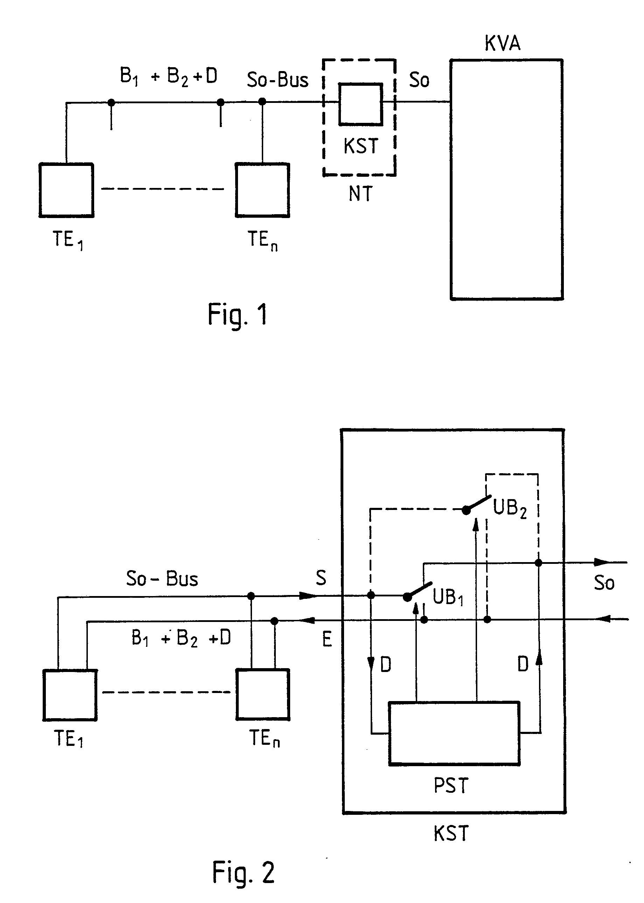

In der Figur 1 ist einadrig dargestellt, wie eine sogenannte So-Schnittstelle an einer Kommunikations-Vermittlungsanlage KVA angeordnet ist. Eine derartige Schnittstelle So kann je nach den Erfordernissen bezüglich der Reichweite mit oder ohne Netzabschlußeinrichtung NT betrieben werden. Zu den daran anschließbaren Teilnehmerendgeräten TE1 bis TEn führt ein sogenannter So-Bus, worüber ankommende und abgehende Verbindungen hergestellt werden können. Auf dem So-Bus sind zwei Nutzdatenkanäle B1 und B2 sowie ein Signalisierungskanal D vorgesehen. Darüber können auch Verbindungen der an diesem So-Bus angeschlossenen Teilnehmerendgeräten TE1 bis TEn untereinander stattfinden.

Anhand der Figur 2 werden nun die Funktionen einer Kanalsteuerung KST beschrieben, die es ermöglicht, eine Verbindung von zwei am gleichen So-Bus angeschlossenen Endgeräten herzustellen, wobei nur ein Nutzdatenkanal B belegt wird. Hierfür ist eine Programmsteuerung PST vorgesehen, welche über den Signalisierungskanal D Informationen erhält, an denen zu erkennen ist,ob eine Internverbindung zwischen zwei Teilnehmerendgeräten, beispielsweise TE1 und TEn hergestellt werden soll, welche am gleichen So-Bus angeschlossen sind.

Es sei angenommen, daß von einem Teilnehmerendgerät TE1 eine Verbindung aufgebaut wird, wobei der erste Nutzdatenkanal B1 belegt wird. Im Rahmen der für derart genormte Schnittstellen vorgesehenen Signalisierungsprotokolle werden entsprechende Informationen zwischen dem Teilnehmerendgerät TE1 und der Kommunikations-Vermittlungsanlage KVA über die So-Schnittstelle ausgetauscht. Wenn der Belegungswunsch aufgenommen worden ist, so erhält das Teilnehmerendgerät TE1 ein Wahlaufforderungssignal zugesendet. Wenn nun durch die Abgabe der Wahlinformation durch den Teilnehmer das Ziel der Verbindung mitgeteilt wird, so kann die Programmsteuerung PST an der Wahlinformation er kennen, ob die Verbindung zu einem an die gleiche So-Schnittstelle angeschlossenen Endgerät, z.B. TEn aufgebaut werden soll. Diese Information wird der Programmsteuerung PST über den Signalisierungskanal D zugeführt, und einem Vergleicher angeboten. Der Vergleicher stellt nun fest, ob in der Wahlinformation eine Zielkennzeichnung enthalten ist, die mit einer in der Programmsteuerung PST eingespeicherten Zieladresse übereinstimmt, welche zu einem der Teilnehmerendgeräte TE gehört, die an dem betreffenden So-Bus angeschlossen sind. Da außerdem bekannt ist, welcher Nutzkanal, z.B. B1 belegt worden ist, wird eine diesem Nutzdatenkanal B1 zugeordnete zeitmultiplexe Umschalteeinrichtung UB1 aktiviert. Diese Umschalteeinrichtung UB1 verbindet in den durch den Nutzdatenkanal B1 belegten Zeitschlitzen die Sendeleitung S auf direktem Weg mit der Empfangsleitung E. Auf diesem Weg findet zunächst eine gerichtete Verbindung statt, ohne daß der zweite Nutzdatenkanal B2 belegt werden muß. Da bei einer derartigen Verbindung zur Kommunikations-Vermittlungsanlage KVA hin nur der erste Nutzdatenkanal B1 als belegt gemeldet worden ist, gilt der zweite Nutzdatenkanal B2 noch als frei. Darüber kann nun zusätzlich eine abgehende oder ankommende Verbindung mit einem anderen Teilnehmerendgerät TE, welches nicht an diesem So-Bus angeschlossen ist, aufgebaut werden.

Wenn es sich bei einer Internverbindung darum handelt, daß Informationen nur in einer Richtung transportiert werden, wie dies z.B. bei der Textübermittlung (Teletex, Telefax usw.) der Fall ist, so sind während des Bestehens der Verbindung keine Umsteuerprozeduren für den Nutzdatenkanal B1 erforderlich. Notwendige Steuerkennzeichen zwischen den beiden an der Internverbindung beteiligten Teilnehmerendgeräten TE1 und TEn können über den Signalisierungskanal D ausgetauscht werden. Bei einer Fernsprechverbindung muß ein wechselseitiger Informationsaustausch möglich sein. Um dies zu erreichen, können die Teilnehmerendgeräte TE in besonderer Weise programmiert sein, wenn sie an eine Schnittstelle angeschlossen sind, die mit einer Kanalsteuerung ausgestattet ist. Beim Zustandekommen einer Verbindung wird zunächst vom angerufenen Teilnehmerendgerät TEn aus eine sprachliche Teilnehmermeldung abgegeben, so daß in diesem Moment nur eine Sprachübertragung zum anrufenden Teilnehmerendgerät TE1 stattfindet.

Im weiteren Verlauf der Gesprächsverbindung ist eine mehrmalige Umschaltung der Gesprächsrichtung notwendig in Abhängigkeit davon, welcher der beiden miteinander verbundenen Teilnehmer gerade spricht. Dies kann bei einfacheren Teilnehmerendgeräten TE durch Betätigen einer Steuertaste erfolgen. Dabei kann festgelegt sein, daß die Steuerfunktion für das Umschalten der Gesprächsrichtungen beim Endgerät des anrufenden Teilnehmers liegt.

Wenn die an der Internverbindung beteiligten Teilnehmerendgeräte TE1, TEn mit Freisprecheinrichtungen ausgestattet sind, welche sprachgesteuerte Richtungsumschalteinrichtungen aufweisen, ergibt sich ein automatisch ablaufender Wechselsprechverkehr. Dabei wird das Umschalten der Gesprächsrichtungen jeweils in den beteiligten Teilnehmerendgeräten TE1 und TEn vorgenommen, ohne daß die Programmsteuerung PST beeinflußt werden muß.

Während einer bestehenden Internverbindung ist der andere Nutzdatenkanal B2 frei, so daß eine zusätzliche ankommende oder abgehende Verbindung zu einem anderen Teilnehmerendgerät TE bestehen kann, welches nicht an diese So-Schnittstelle angeschlossen ist. Da in diesem Fall die Sendeleitung S und die Empfangsleitung E direkt zur Kommunikations-Vermittlungsanlage KVA durchgeschaltet ist, ist eine zusätzliche doppelt gerichtete Verbindungsmöglichkeit vorhanden.

Es ist jedoch auch denkbar, über den zweiten Nutzdatenkanal B2 eine zusätzliche Internverbindung herzustellen, so daß dann an insgesamt zwei bestehenden Internverbindungen vier Teilnehmerendgeräte TE1 bis TEn beteiligt sind. In diesem Fall wird, wie vorher beschrieben worden ist, auch für den zweiten Nutzdatenkanal eine Besetztmeldung zur Kommunikations-Vermittlungsanlage KVA abgegeben, so daß keine weitere Verbindung mehr zu der betreffenden So-Schnittstelle möglich ist. Wenn betriebliche Gegebenheiten dies verlangen, so kann in der Programmsteuerung PST festgelegt werden, daß eine weitere Internverbindung nicht zugelassen wird, wenn bereits eine Internverbindung besteht.

Auf jeden Fall ist aber in der Kanalsteuerung KST eine zweite Umschalteinrichtung UB2 (gestrichelt gezeichnet) vorgesehen, weil eine Internverbindung auch möglich sein soll, wenn der erste Nutzdatenkanal B1 bereits vorher durch eine anderweitige Verbindung belegt worden ist.

Beim Auslösen einer Internverbindung wird von dem auslösenden Teilnehmerendgerät, z.B. TE1 aus die bei einer Auslösung übliche Signalisierungsmeldung auf dem Signalisierungskanal D abgegeben. Diese Meldung wird von der Programmsteuerung PST empfangen und führt dazu, daß die zugehörige Umschalteinrichtung UB1 in ihre Ruhelage zurückkehrt. Außerdem wird eine Meldung zur Kommunikations-Vermittlungsanlage KVA über den Signalisierungskanal D abgegeben, so daß auch dort das Freiwerden des Nutzdatenkanals B1 und das Freiwerden des betreffenden Teilnehmerendgerätes TE1 bekannt wird.

Die für das Dienste integrierende Digitalnetz ISDN vorgesehenen Signalisierungsprotokolle können ohne weiteres auch beim Einsatz einer Kanalsteuereinrichtung KST beibehalten werden. Zusätzliche Signalisierungen, die für das Umschalten von Gesprächsrichtungen notwendig sind, können zwischen den an einer Internverbindung beteiligten Teilnehmerendgeräten TE ausgetauscht werden, ohne daß diese zur Kommunikations-Vermittlungsanlage KVA gelangen. Somit ist es auch möglich, daß Endgeräte selbsttätig Informationen, beispielsweise Texte gegenseitig austauschen, wobei jeweils ein sendewilliges Teilnehmerendgerät TE eine Meldung für die Umschaltung der Verbindungsrichtung dann abgibt, wenn es keine Daten mehr empfängt und selbst Informationen zum Teilnehmerendgerät TE auf der Gegenseite aussenden will. Da bei allen Internverbindungen die zu dem jeweils belegten Nutzdatenkanal B1 oder B2 zugehörige Umschalteinrichtung UB1, bzw. UB2 aktiviert ist, gelangen keine Nutzdaten über die So-Schnittstelle zur Kommunikations-Vermittlungsanlage. Der Kommunikations-Vermittlungsanlage KVA wird bei einer Intenverbindung lediglich über den Signalisierungskanal D mitgeteilt, wenn sich am Zustand der bestehenden Internverbindung eine Änderung ergibt, welche für die Kommunikations-Vermittlungsanlage KVA relevant ist.

## Ansprüche

1. Verfahren zum direkten Verbinden von an digitalen Kommunikations-Vermittlungsanlagen angeschlossenen Endgeräten, welche gemeinsam an einer von einer genormten Schnittstelle einer diensteintegrierenden digitalen Kommunikations-Vermittlungsanlage ausgehenden Busleitung betrieben werden, wobei auf dieser Busleitung digitale Nutzdaten- und Signalisierungskanäle zur Verfügung stehen,
dadurch gekennzeichnet,
daß zwischen die Schnittstelle (So) der Kommunikations-Vermittlungsanlage (KVA) und die davon ausgehende Busleitung (So-Bus) eine Kanalsteuerung (KST) geschaltet ist, welche eine Programmsteuerung (PST) enthält, die beim Aufbauen einer von einem der angeschlossenen Endgeräte (z.B. TE 1) ausgehenden Verbindung an der auf dem Signalisierungskanal (D) gesendeten Information erkennt, ob die Verbindung zu einem an der gleichen Busleitung (So-Bus) angeschlossenen Endgerät (z.B. TEn) führt, daß dann eine Umschalteinrichtung (z.B. UB1) aktiviert wird, welche die Sendeleitung (S) während der Durchschaltung des belegten Nutzdatenkanals (z.B. B1) auf die Empfangsleitung (E) umschaltet, so daß nur ein Nutzdatenkanal belegt wird, auf dem dann eine gerichtete oder wechselseitig gerichtete Internverbindung besteht.

2. Verfahren nach Anspruch 1,
dadurch gekennzeichnet,
daß die Übertragungsrichtung bei einer Internverbindung solange aufrecht erhalten bleibt, wie Nutzinformation gesendet wird, und daß das empfangende Endgerät (TEn) nach dem Ende einer Informationssendung oder bei einer Pause eine Umschaltung der Übertragungsrichtung in beiden an der Verbindung beteiligten Endgeräten (TE1,TEn) bewirken kann, wenn eine Informationsübertragung in der Gegenrichtung stattfinden soll.

3. Verfahren nach Anspruch 2,
dadurch gekennzeichnet,
daß bei Fernsprechverbindungen eine sprachgesteuerte Umschaltung der Übertragungsrichtung stattfindet, wenn dies bei den Endgeräten (TE1, TEn) beispielsweise in Form von Freisprecheinrichtungen vorgesehen ist.

4. Verfahren nach Anspruch 1,
dadurch gekennzeichnet,
daß die Übertragungsrichtung durch eine manuelle Bedienungsprozedur an einem der Endgeräte (z.B. TE1) umschaltbar ist.

5. Verfahren nach Anspruch 1,
dadurch gekennzeichnet,
daß von der Programmsteuerung (PST) aus Signalisierungsdaten über den Signalisierungskanal (D) zur Kommunikations-Vermittlungsanlage (KVA) übertragen werden, um eine Änderung des Verbindungszustandes bei einer Internverbindung zu signalisieren.

6. Verfahren nach Anspruch 1,
dadurch gekennzeichnet,
daß mit in den Endgeräten (TE1 bis TEn) vorhandenen Schaltvorrichtungen und/oder programmierbaren Festwertspeichern eine besondere Programmierung aktiviert wird, wenn sie an einer gemeinsamen Busleitung (So-Bus) angeschlossen sind, die mit einer Kanalsteuerung (KST) ausgestattet ist.

7. Verfahren nach Anspruch 1,
dadurch gekennzeichnet,
daß die Kanalsteuerung (KST) in eine Netzabschlußeinrichtung (NT) eingebaut sein kann.

90103624.4

P 4189

Fig. 1

Fig. 2